# EUROPÄISCHE PATENTSCHRIFT

(11) **EP 2 797 848 B1**
(45) Veröffentlichungstag und Bekanntmachung des Hinweises auf die Patenterteilung: **04.09.2019**
(21) Anmeldenummer: 12818514.7
(22) Anmeldetag: 21.12.2012
(51) Int. Cl.: C03C 25/12, C03C 25/22, G02B 6/42

(54) **VERFAHREN ZUR BESCHICHTUNG VON OPTISCHEN WELLENLEITERN**
METHOD OF COATING OF OPTICAL WAVEGUIDES
PROCÉDÉ DE REVÊTEMENT DE GUIDES D'ONDES OPTIQUES

(30) Priorität: 29.12.2011 DE 102011122510
(43) Veröffentlichungstag der Anmeldung: 05.11.2014
(73) Patentinhaber: Fraunhofer Gesellschaft zur Förderung der angewandten Forschung e.V., 80686 München (DE)
(72) Erfinder: BÖHME, Steffen, 07743 Jena (DE); SCHREIBER, Thomas, 07745 Jena (DE); HARNISCH, Gerd, 07749 Jena (DE)
(74) Vertreter: Isfort, Olaf
(86) Internationale Anmeldenummer: PCT/EP2012/076803
(87) Internationale Veröffentlichungsnummer: WO 2013/098269

(56) Entgegenhaltungen:
- JP-A- H07 157 338
- US-A- 4 575 181
- US-H- H1 461
- OG A ET AL: "PULSED LASER DEPOSITED ZNO FILM ON SIDE-POLISHED FIBER AS A GAS SENSING ELEMENT", APPLIED OPTICS, OPTICAL SOCIETY OF AMERICA, WASHINGTON, DC; US, Bd. 46, Nr. 13, 1. Mai 2007 (2007-05-01), Seiten 2481-2485, XP001541071, ISSN: 0003-6935, DOI: 10.1364/AO.46.002481

## Beschreibung

Die Erfindung betrifft Verfahren zur Herstellung eines optischen Wellenleiters, dessen Oberfläche zumindest teilweise mit einem Beschichtungsstoff überzogen ist, wobei der in einem Target enthaltene Beschichtungsstoff mit Hilfe von Laserstrahlung eines Prozesslasers abgetragen oder in einen anderen Aggregatszustand überführt wird, wonach sich der Beschichtungsstoff auf der Oberfläche des Wellenleiters ablagert und dort einen die Lichtführung modifizierenden Überzug bildet, wobei von dem Target reflektierte oder durch das Target transmittierte Laserstrahlung den Wellenleiter erwärmt, wobei die Laserstrahlung polarisiert ist und unter einem vorgegebenen Winkel zwischen 10° und 80° relativ zur Oberflächennormalen auf das Target auftrifft.

Optische Wellenleiter, wie zum Beispiel optische Fasern, werden für die Erzeugung und/oder den Transport elektromagnetischer Strahlung hoher Leistung verwendet. Dabei wird stets ein Teil der Strahlung auch in unerwünschten Bereichen (zum Beispiel im Fasermantel einer optischen Faser) geführt, oder ein unter einem bestimmten Winkel in den optischen Wellenleiter geführter Teil der elektromagnetischen Strahlung ist für nachfolgende optische Komponenten unerwünscht. Der entsprechende Anteil der elektromagnetischen Strahlung kann, auch wenn dessen Leistung nur wenige Prozent der insgesamt in dem optischen Wellenleiter geführten Leistung ausmacht, bei entsprechend hoher Gesamtleistung zur Zerstörung des Wellenleiters oder angrenzender Bauteile (zum Beispiel Faserstecker) führen.

Bei vergleichsweise geringen optischen Leistungen besteht die Möglichkeit, den Wellenleiter in ein hochtransparentes Medium (z.B. Klebstoff) einzubetten, der hinsichtlich des Brechungsindex angepasst ist. Der Brechungsindex muss dabei größer oder gleich demjenigen des Wellenleiters sein, so dass Licht aus dem Wellenleiter austritt. Das durch den Klebstoff transportierte Licht kann dann in einem geeigneten Medium absorbiert und in Wärme umgewandelt werden. Die entstehende Wärme wird in geeigneter Form abgeführt. Ein Problem ist die in dem Medium auftretende Restabsorption, die bei hohen Leistungen zu starker Erwärmung bis zur Zerstörung führen kann.

Eine weitere Möglichkeit, unerwünschte elektromagnetische Strahlung abzuführen besteht darin, die Oberfläche des Wellenleiters, d.h. zum Beispiel die äußere Oberfläche des Fasermantels einer optischen Faser, anzurauen oder chemisch anzuätzen. Die angeraute oder angeätzte Oberfläche bewirkt, dass Totalreflektion an der Grenzfläche zu dem den optischen Wellenleiter umgebenden Medium durch lokale Streuung vermieden wird. Zum chemischen Anätzen der Oberfläche einer Glasfaser verwendet man üblicherweise verdünnte Flusssäure. Nachteilig ist bei diesem Vorgehen, dass die mechanische Festigkeit des optischen Wellenleiters geschwächt wird. Die resultierende Fragilität erschwert die weitere Verwendung des optischen Wellenleiters, wie zum Beispiel zum Einbau in einen Faserstecker. Dadurch wird die Herstellung entsprechender optischer Anordnungen aufwendig und damit teuer. Problematisch ist weiterhin, dass der Umgang mit verdünnter Flusssäure hochgefährlich und umweltschädlich ist.

Andere aus dem Stand der Technik bekannte Verfahren, bei denen direkt (teil-) absorbierende Materialien auf der Oberfläche des optischen Wellenleiters angebracht werden, sind wegen des hohen Wärmeeintrags für hohe Leistungen der zu erzeugenden oder zu führenden elektromagnetischen Strahlung nicht geeignet. Ein Verfahren nach dem Oberbegriff des Anspruchs 1 ist aus der Veröffentlichung "Pulsed laser deposited ZnO film on side-polished fiber as a gas sensing element"; Anna Og. Dikosvska et al., APPLIED OPTICS, OPTICAL SOCIETY OF AMERICA, WASHINGTON, DC; US, Bd. 46, Nr. 13, 1. Mai 2007 (2007-05-01), Seiten 2481-2485; bekannt.

Somit ist es Aufgabe der Erfindung, ein gegenüber dem Stand der Technik verbessertes Verfahren zur Herstellung von optischen Wellenleitern bereitzustellen, bei denen die Führung unerwünschter elektromagnetischer Strahlung bzw. die Führung von Strahlung in unerwünschten Bereichen des Wellenleiters vermieden wird. Aufgabe ist es somit, anders ausgedrückt, optische Wellenleiter bereitzustellen, die hochleistungsstabil sind und eine verbesserte Strahlqualität liefern.

Diese Aufgabe löst die Erfindung ausgehend von einem Verfahren der eingangs angegeben Art dadurch, dass von dem Target reflektierte oder durch das Target transmittierte Laserstrahlung den Wellenleiter erwärmt, wobei die Laserstrahlung polarisiert ist und unter einem vorgegebenen Winkel zwischen 10° und 80° relativ zur Oberflächennormalen auf das Target auftrifft und daß der Prozesslaser bei dem erfindungsgemäßen Verfahren zunächst kontinuierlich bei niedrigerer Leistung emittiert, um den Wellenleiter zu erwärmen, wonach der Prozesslaser dann gepulst bei höherer Leistung betrieben wird, um den Beschichtungsstoff von dem Target abzutragen, der sich dann auf der erwärmten Oberfläche des Wellenleitermantels ablagert.

Gemäß der Erfindung wird durch laserbasierte Deposition des Beschichtungsstoffs auf dem optischen Wellenleiter dessen Oberfläche hinsichtlich der Lichtleitung zum angrenzenden Medium in der Weise modifiziert, dass unerwünschte elektromagnetische Strahlung an der Propagation in dem optischen Wellenleiter gehindert wird. Die durch Laserdeposition abgelagerte Beschichtung haftet fest auf der Oberfläche des optischen Wellenleiters. Die mechanische Festigkeit des Wellenleiters wird durch den lichtstreuenden Überzug nicht nennenswert gemindert. Der gemäß der Erfindung modifizierte optische Wellenleiter kann ohne die oben beschriebenen Nachteile verwendet werden, zum Beispiel für den Einbau in Faserstecker oder den Aufbau von Faserlasern.

Ein weiterer Vorteil ist, dass das erfindungsgemäße Herstellungsverfahren kompatibel zu Spleiß-, Cleave- und Taperprozessen ist, die ebenfalls laserbasiert auf der gleichen Herstellungsanlage durchgeführt werden können. Dies gewährleistet eine kontinuierliche und effiziente Konfektionierung von optischen Wellenleitern.

Schließlich wird durch die erfindungsgemäß herbeigeführte Entfernung unerwünschter elektromagnetischer Strahlung eine Verbesserung der Strahlqualität der aus dem optischen Wellenleiter austretenden Strahlung erreicht. Dadurch ergeben sich weitere Anwendungsfelder.

Auch für gegebenenfalls in den optischen Wellenleiter zurücklaufende elektromagnetische Strahlung entsteht ein wirksamer Schutz durch den erfindungsgemäß aufgebrachten lichtstreuenden Überzug. Dies ist vorteilhaft für Anwendungen, bei denen die durch den optischen Wellenleiter geführte elektromagnetische Strahlung zur Bearbeitung reflektierender Werkstoffe (zum Beispiel Stahl), beispielsweise zum Schneiden oder Schweißen, verwendet wird. Bei derartigen Anwendungen wird reflektierte elektromagnetische Strahlung häufig in den Mantel des optischen Wellenleiters eingekoppelt und führt zur Zerstörung des optischen Wellenleiters selbst und/oder angrenzender Bauteile. Diese Probleme können durch den erfindungsgemäß hergestellten optischen Wellenleiter vermieden werden.

Ein Vorteil des erfindungsgemäßen Verfahrens ist außerdem, dass der Umgang mit gefährlicher Flusssäure zum Anätzen der Manteloberfläche des optischen Wellenleiters unterbleiben kann.

Gemäß der Erfindung ist das Target in der Weise (z.B. in der Nähe, d.h. in hinreichend geringem Abstand zum Wellenleiter) angeordnet, so dass von dem Target reflektierte oder durch das Target transmittierte Laserstrahlung den Wellenleiter erwärmt. Es zeigt sich, dass es zur Herstellung eines qualitativ guten und gut anhaftenden lichtstreuenden Überzugs von Vorteil ist, den Wellenleiter zu erwärmen, bevor der Beschichtungsstoff darauf abgelagert wird. Dabei wird zum Abtragen des Beschichtungsstoffes polarisierte Laserstrahlung verwendet, die unter einem vorgegebenen Winkel zwischen 10 Grad und 80 Grad relativ zur Oberflächennormalen auf das Target auftrifft. Durch den Auftreffwinkel der polarisierten Strahlung kann der Anteil der auf den optischen Wellenleiter reflektierten Strahlung und damit die Erwärmung des optischen Wellenleiters kontrolliert werden.

Bei einer bevorzugten Ausgestaltung des erfindungsgemäßen Verfahrens ist der Beschichtungsstoff für ein in dem optischen Wellenleiter bei einer Applikationswellenlänge propagierendes Licht weitgehend transparent. Die Transparenz des gemäß der Erfindung aufgebrachten Überzugs sorgt für eine ausgezeichnete Hochleistungsstabilität. Die aus dem optischen Wellenleiter durch Streuung abgeführte unerwünschte elektromagnetische Strahlung wird in dem Überzug nicht absorbiert und kann somit nicht zu Beschädigungen des optischen Wellenleiters und des Überzugs führen. Die durch den Überzug gestreute elektromagnetische Strahlung kann anderweitig durch geeignete Absorber in Wärme umgewandelt und dadurch vernichtet werden.

Andererseits sollte der Beschichtungsstoff die Strahlung des für die Herstellung des Überzugs verwendeten Prozesslasers zumindest teilweise absorbieren. Auf diese Weise erhitzt der Prozesslaser den in dem Target enthaltenden Beschichtungsstoff, überführt ihn so in die Dampfphase, so dass sich der Beschichtungsstoff dann aus der Dampfphase auf der Manteloberfläche des optischen Wellenleiters ablagert.

Als Prozesslaser für das erfindungsgemäße Verfahren eignet sich zum Beispiel ein CO₂-Laser. Leistungsstarke CO₂-Laser sind als äußerst zuverlässige Standardkomponenten kommerziell erhältlich.

Als Beschichtungsstoff eignet sich bei einer bevorzugten Ausgestaltung des erfindungsgemäßen Verfahrens dotiertes oder undotiertes Kieselglas, oder ein anderes zum Material des Wellenleiters chemisch äquivalentes Material. Kieselglas ist besonders wärmestabil. Das hat zur Folge, dass selbst bei einer Erwärmung auf Grund geringer Restabsorption von Strahlung keine Beschädigung zu befürchten ist. Das Kieselglas ist bei für viele Applikationen relevanten Wellenlängen hochtransparent. Andererseits absorbiert Kieselglas die Infrarotstrahlung eines CO₂-Lasers, so dass Kieselglas als Beschichtungsstoff mittels eines CO₂-Lasers zum Zwecke der Erzeugung des lichtstreuenden Überzugs verdampft werden kann.

Bei dem erfindungsgemäßen Verfahren kann der Wellenleiter während der Bildung des Überzugs um seine Längsachse gedreht werden, so dass die Beschichtung gleichmäßig von allen Seiten auf der Oberfläche des Wellenleiters abgeschieden wird.

Besonders bevorzugt ist eine Ausgestaltung des erfindungsgemäßen Verfahrens, bei der das Target den Wellenleiter (ganz oder teilweise) ringförmig umschließt. Dabei wird das Target von dem Prozesslaser möglichst in einer den Wellenleiter ganz oder teilweise umschließenden Ringzone bestrahlt. Bei diesem Vorgehen wird der lichtstreuende Überzug gleichmäßig von allen Seiten auf der Oberfläche des Wellenleiters abgelagert.

Während der erfindungsgemäßen Ablagerung des Beschichtungsstoffes auf der Oberfläche des Wellenleiters kann der Wellenleiter in Richtung seiner Längsachse kontinuierlich oder intermittierend relativ zu dem Target bewegt werden. Auf diese Weise kann der Überzug auf einem Oberflächenabschnitt mit vorgebbarer Längsausdehnung (z.B. über mehrere Zentimeter) gebildet werden.

Bei dem erfindungsgemäßen Verfahren kann nach der Bildung des Überzugs eine Glaskapillare auf den optischen Wellenleiter aufkollabiert werden, um so eine schützende Umhüllung zu erzeugen.

Ein wesentlicher Vorteil der Erfindung ist weiterhin, dass die Bildung des Überzugs unter Normalatmosphäre (d.h. z.B. Luft) erfolgen kann. Eine z.B. evakuierbare oder mit Prozessgas befüllbare Kammer ist für das erfindungsgemäße Verfahren dann nicht erforderlich. Somit kann der Überzug erfindungsgemäß zu besonders niedrigen Kosten erzeugt werden.

Der äußere Durchmesser des erfindungsgemäß hergestellten optischen Wellenleiters einschließlich Überzug kann 100 µm bis 10 mm betragen.

Das erfindungsgemäße Verfahren kann bei einer bevorzugten Ausgestaltung wiederholt durchgeführt werden, so dass der Beschichtungsstoff auf der Oberfläche des Wellenleiters in mehreren Schichten nacheinander abgelagert wird. Hierzu kann z.B. der Wellenleiter mehrfach an dem Target entlang geführt werden.

Aufgrund der Hochleistungstauglichkeit des erfindungsgemäß hergestellten optischen Wellenleiters eignet dieser sich gut für den Aufbau von leistungsstarken Faserlasern.

Da bei dem erfindungsgemäß hergestellten optischen Wellenleiter unerwünschte Strahlungsanteile effektiv unterdrückt werden, eignet sich der Wellenleiter hervorragend zur Konfektionierung für einen Faserstecker.

Ausführungsbeispiele der Erfindung werden im Folgenden anhand der Zeichnungen erläutert. Es zeigen:
- Figur 1: Schematische Darstellung des erfindungsgemäßen Verfahrens mit einem neben einer optischen Faser angeordneten Beschichtungsstoff-Target;
- Figur 2: Ausführungsbeispiel der Erfindung, bei dem das Target die optische Faser ringförmig umschließt.

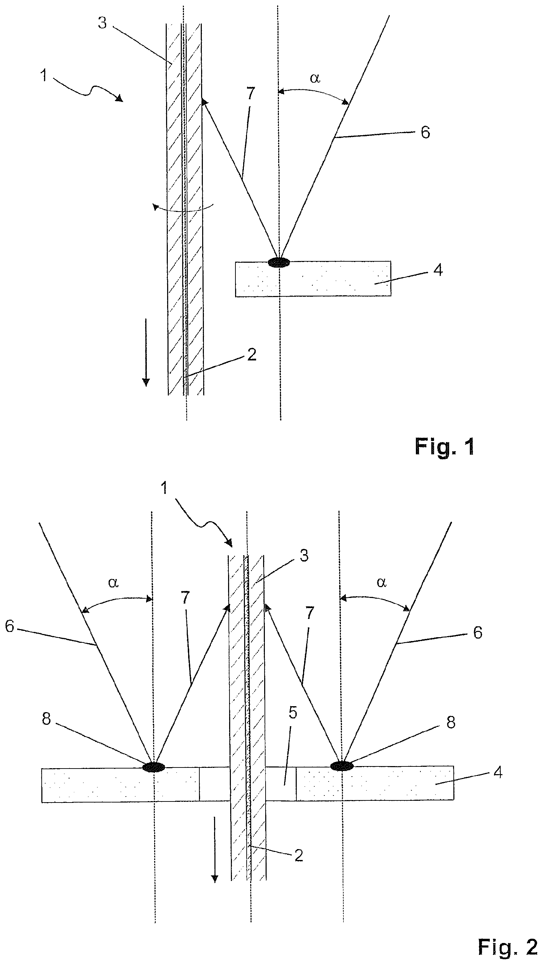

Das erfindungsgemäße Verfahren dient, wie oben ausgeführt, zur Herstellung eines optischen Wellenleiters, beispielsweise einer optischen Faser 1, die aus einem Faserkern 2 und einem Fasermantel 3 besteht. Durch das erfindungsgemäße Verfahren wird die äußere Oberfläche des Fasermantels 3 teilweise mit einem Beschichtungsstoff überzogen. Der Beschichtungsstoff ist in einem Target 4 enthalten, das in dem in Figur 1 dargestellten Ausführungsbeispiel seitlich neben der Faser 1 in geringem Abstand angeordnet ist. Bei dem Ausführungsbeispiel gemäß Figur 2 umschließt das Target 4 die optische Faser 1 ringförmig. Das ringförmige Target 4 weist gemäß Figur 2 eine zentrale Öffnung 5 auf, durch welche die Faser 1 hindurchgeführt wird. Ein Laserstrahl 6, beispielsweise eines CO₂-Lasers, trifft auf das Target 4 auf.

Die Laserstrahlung 6 ist polarisiert und trifft unter einem einstellbaren Winkel α auf das Target 4 auf. Durch den Winkel α kann eingestellt werden, wie groß der Anteil der reflektierten Laserstrahlung 7 ist, die auf den Fasermantel 3 auftrifft.

Zunächst wird der Laserstrahl 6 kontinuierlich (cw-Betrieb) eingestrahlt, wodurch eine bestimmte Temperatur des Fasermantels 3 eingestellt wird. Unmittelbar nach diesem Aufheizvorgang wird der Laserstrahl 6 gepulst eingestrahlt, beispielsweise mit einer Pulsdauer im Bereich von ca. 100 µs bis 100 ms, um den Beschichtungsstoff von dem Target 4 abzutragen (zum Beispiel durch Verdampfen). Der Beschichtungsstoff schlägt sich dann auf der erhitzten Faser 1 nieder und haftet dort stabil an.

Der aus dem Target 4 auf der Faser 1 abgelagerte Beschichtungsstoff kann reines oder dotiertes Kieselglas oder auch ein anderes transparentes Material sein, das eine hinreichend gute Absorption im Bereich der Wellenlänge der Laserstrahlung 6 aufweist.

Um ein gleichmäßiges Ablagern des Beschichtungsstoffs auf der Oberfläche des Fasermantels 3 über den gesamten Faserumfang und über eine bestimmte Längserstreckung der Faser zu gewährleisten, wird bei dem Ausführungsbeispiel gemäß Figur 1 die Faser 1 um ihre Längsachse gedreht. Gleichzeitig wird die Faser 1 entlang ihrer Längsachse kontinuierlich oder intermittierend in Pfeilrichtung vorgeschoben.

Bei dem in Figur 2 dargestellten Ausführungsbeispiel beleuchtet der Laserstrahl 6 eine Ringzone 8 auf dem ringförmigen Target 4. Hierzu kann der Laserstrahl 6 entweder kontinuierlich abgelenkt werden, oder es wird ein ringförmiger oder ringsegmentförmiger Laserstrahl 6 durch geeignete Optik geformt. Der Beschichtungsstoff lagert sich dabei von allen Seiten über den gesamten Umfang der Faser 1 auf deren Mantel 3 ab.

Das auf der Faser 1 abgelagerte Material des Beschichtungsstoffs ist bei einer vorgegebenen Applikationswellenlänge hochtransparent, wie das Fasermaterial selbst. Daher erfolgt in dem erfindungsgemäß aufgebrachten Überzug keine signifikante Absorption der in dem Wellenleiter propagierenden Strahlung. Der Überzug dient nur der Lichtstreuung, um denjenigen Anteil der im Fasermantel 3 propagierenden Strahlung zu eliminieren, der für die betreffende Applikation unerwünscht ist.

## Patentansprüche

1. Verfahren zur Herstellung eines optischen Wellenleiters (1), dessen Oberfläche zumindest teilweise mit einem Beschichtungsstoff überzogen ist, wobei der in einem Target (4) enthaltene Beschichtungsstoff mit Hilfe von Laserstrahlung (6) eines Prozesslasers abgetragen oder in einen anderen Aggregatszustand überführt wird, wonach sich der Beschichtungsstoff auf der Oberfläche des Wellenleiters (1) ablagert und dort einen die Lichtführung modifizierenden Überzug bildet, wobei von dem Target (4) reflektierte oder durch das Target transmittierte Laserstrahlung (7) den Wellenleiter (1) erwärmt, wobei die Laserstrahlung (6) polarisiert ist und unter einem vorgegebenen Winkel (α) zwischen 10° und 80° relativ zur Oberflächennormalen auf das Target (4) auftrifft,
**dadurch gekennzeichnet, dass** der Prozesslaser zunächst kontinuierlich bei niedrigerer Leistung emittiert, um den Wellenleiter (1) zu erwärmen, wonach der Prozesslaser gepulst bei höherer Leistung emittiert, um den Beschichtungsstoff abzutragen oder in einen anderen Aggregatszustand zu überführen.

2. Verfahren nach Anspruch 1, **dadurch gekennzeichnet, dass** der Beschichtungsstoff für ein in dem optischen Wellenleiter (1) bei einer Applikationswellenlänge propagierendes Licht transparent ist.

3. Verfahren nach Anspruch 1 oder 2, **dadurch gekennzeichnet, dass** der Beschichtungsstoff die Laserstrahlung des Prozesslasers zumindest teilweise absorbiert.

4. Verfahren nach einem der Ansprüche 1 bis 3, **dadurch gekennzeichnet, dass** der Prozesslaser ein CO₂-Laser ist.

5. Verfahren nach einem der Ansprüche 1 bis 4, **dadurch gekennzeichnet, dass** der Beschichtungsstoff dotiertes oder undotiertes Kieselglas ist.

6. Verfahren nach einem der Ansprüche 1 bis 5, **dadurch gekennzeichnet, dass** der Wellenleiter (1) während der Bildung des Überzugs um seine Längsachse gedreht wird.

7. Verfahren nach einem der Ansprüche 1 bis 6, **dadurch gekennzeichnet, dass** das Target (4) den Wellenleiter (1) ganz oder teilweise ringförmig umschließt.

8. Verfahren nach Anspruch 7, **dadurch gekennzeichnet, dass** das Target (4) von dem Prozesslaser in einer den Wellenleiter (1) ganz oder teilweise umschließenden Ringzone (8) bestrahlt wird.

9. Verfahren nach einem das Ansprüche 1 bis 8, **dadurch gekennzeichnet, dass** der Wellenleiter (1) in Richtung seiner Längsachse kontinuierlich oder intermittierend relativ zu dem Target (4) bewegt wird, so dass der Überzug auf einem Mantelabschnitt mit vorgebbarer Längserstreckung gebildet wird.

10. Verfahren nach einem der Ansprüche 1 bis 9, **dadurch gekennzeichnet, dass** der optische Wellenleiter (1) eine optische Faser ist.

11. Verfahren nach einem der Ansprüche 1 bis 10, **dadurch gekennzeichnet, dass** nach der Bildung des Überzugs eine Glaskapillare auf den optischen Wellenleiter (1) aufkollabiert wird und so eine schützende Umhüllung bildet.

12. Verfahren nach einem der Ansprüche 1 bis 11, **dadurch gekennzeichnet, dass** die Bildung des Überzugs unter Normalatmosphäre erfolgt.

13. Verfahren nach einem der Ansprüche 1 bis 12, **dadurch gekennzeichnet, dass** der Überzug über mehrere Zentimeter entlang der Längserstreckung des optischen Wellenleiters (1) gebildet wird.

14. Verfahren nach einem der Ansprüche 1 bis 13, **dadurch gekennzeichnet, dass** der Durchmesser des optischen Wellenleiters (1) einschließlich Überzug 125 µm bis 10 mm beträgt.

15. Verfahren nach einem der Ansprüche 1 bis 14, **dadurch gekennzeichnet, dass** der Beschichtungsstoff auf der Oberfläche (3) des Wellenleiters (1) in mehreren Schichten nacheinander abgelagert wird.

## Claims

1. Method for producing an optical waveguide (1), the surface of which is at least partly coated with a coating material, said coating material contained in a target (4) being removed by means of laser radiation (6) from a process laser or converted into another aggregate state, whereupon the coating material deposits on the surface of the waveguide (1) and forms a coating thereon modifying the light guidance, wherein the laser radiation (7) reflected from the target (4) or transmitted through the target heats-up the waveguide (1), said laser radiation (6) being polarized and impinging the target (4) at a specified angle (α) between 10° and 80° relative to the surface normal,
**characterized in that** the process laser initially emits continuously at a lower performance rate in order to heat-up the waveguide (1), whereupon the process laser emits in pulsed mode at a higher performance rate in order to remove the coating material or to convert it into a different aggregate state.

2. Method according to claim 1, **characterized in that** the coating material is transparent to a light propagating in the optical waveguide (1) at an application wavelength.

3. Method according to claim 1 or 2, **characterized in that** the coating material at least partly absorbs the laser radiation from the process laser.

4. Method according to any of the preceding claims 1 to 3, **characterized in that** the process laser is a CO₂-laser.

5. Method according to any of the preceding claims 1 to 4, **characterized in that** the coating material is doped or undoped silica glass.

6. Method according to any of the preceding claims 1 to 5, **characterized in that** the waveguide (1) is rotated about its longitudinal axis during formation of the coating.

7. Method according to any of the preceding claims 1 to 6, **characterized in that** the target (4) circularly encloses the waveguide (1) wholly or partly.

8. Method according to claim 7, **characterized in that** the target (4) is irradiated from the process laser in a ring-shaped zone (8) wholly or partly enclosing the waveguide (1).

9. Method according to any of the preceding claims 1 to 8, **characterized in that** the waveguide (1) is moved continuously or intermittently in its longitudinal axis relative to the target (4) so that the coating is formed on a cladding section with a pre-definable longitudinal extension.

10. Method according to any of the preceding claims 1 to 9, **characterized in that** the optical waveguide (1) is an optical fiber.

11. Method according to any of the preceding claims 1 to 10, **characterized in that** after formation of the coating a glass capillary is collapsed on the optical waveguide (1) and thus forms a protective sheathing.

12. Method according to any of the preceding claims 1 to 11, **characterized in that** the formation of the coating is executed under normal atmosphere.

13. Method according to any of the preceding claims 1 to 12, **characterized in that** the coating is formed over several centimeters along the longitudinal extension of the optical waveguide (1).

14. Method according to any of the preceding claims 1 to 13, **characterized in that** the diameter of the optical waveguide (1) including coating accounts for 125 µm up to 10 mm.

15. Method according to any of the preceding claims 1 to 14, **characterized in that** the coating material is deposited on the surface (3) of the waveguide (1) consecutively in several layers.

## Revendications

1. Procédé de fabrication d'un guide d'ondes (1) optique, dont la surface est au moins partiellement recouverte par un matériau de revêtement, le matériau de revêtement contenu dans une cible (4) étant enlevé ou transformé en un autre état physique à l'aide du rayonnement laser (6) d'un laser de processus, après quoi le matériau de revêtement est déposé sur la surface du guide d'ondes (1) et y forme un enrobage qui modifie le guidage de la lumière, le rayonnement laser (7) réfléchit par la cible (4) ou transmis à travers la cible réchauffant le guide d'ondes (1), le rayonnement laser (6) étant polarisé et étant incident sur la cible (4) sous un angle (α) prédéfini entre 10° et 80° par rapport à la normale à la surface,
**caractérisé en ce que** le laser de processus émet tout d'abord continuellement à basse puissance en vue de réchauffer le guide d'ondes (1), après quoi le laser de processus émet de manière pulsée à une puissance plus élevée en vue d'enlever le matériau de revêtement ou le transformer en un autre état physique.

2. Procédé selon la revendication 1, **caractérisé en ce que** le matériau de revêtement est transparent pour une lumière qui se propage dans le guide d'ondes (1) optique à une longueur d'onde d'application.

3. Procédé selon la revendication 1 ou 2, **caractérisé en ce que** le matériau de revêtement absorbe au moins partiellement le rayonnement laser du laser de processus.

4. Procédé selon l'une des revendications 1 à 3, **caractérisé en ce que** le laser de processus est un laser au CO₂.

5. Procédé selon l'une des revendications 1 à 4, **caractérisé en ce que** le matériau de revêtement est du verre de quartz dopé et non dopé.

6. Procédé selon l'une des revendications 1 à 5, **caractérisé en ce que** le guide d'ondes (1) est tourné sur son axe longitudinal pendant la formation de l'enrobage.

7. Procédé selon l'une des revendications 1 à 6, **caractérisé en ce que** la cible (4) entoure entièrement ou partiellement le guide d'ondes (1) en forme d'anneau.

8. Procédé selon la revendication 7, **caractérisé en ce que** la cible (4) est irradiée par le laser de processus dans une zone annulaire (8) qui entoure entièrement ou partiellement le guide d'ondes (1).

9. Procédé selon l'une des revendications 1 à 8, **caractérisé en ce que** le guide d'ondes (1) est déplacé continuellement ou par intermittence par rapport à la cible (4) dans la direction de son axe longitudinal, de sorte que l'enrobage est formé sur une portion d'enveloppe avec une projection longitudinale pouvant être prédéfinie.

10. Procédé selon l'une des revendications 1 à 9, **caractérisé en ce que** le guide d'ondes (1) optique est une fibre optique.

11. Procédé selon l'une des revendications 1 à 10, **caractérisé en ce qu'**après la formation de l'enrobage, un capillaire en verre est appliqué par affaissement sur le guide d'ondes (1) optique et forme ainsi une enveloppe protectrice.

12. Procédé selon l'une des revendications 1 à 11, **caractérisé en ce que** la formation de l'enrobage s'effectue sous atmosphère normale.

13. Procédé selon l'une des revendications 1 à 12, **caractérisé en ce que** l'enrobage est formé sur plusieurs centimètres le long de la projection longitudinale du guide d'ondes (1) optique.

14. Procédé selon l'une des revendications 1 à 13, **caractérisé en ce que** le diamètre du guide d'ondes (1) optique, enrobage compris, est de 125 µm à 10 mm.

15. Procédé selon l'une des revendications 1 à 14, **caractérisé en ce que** le matériau de revêtement est déposé sur la surface (3) du guide d'ondes (1) en plusieurs couches successives.
